# EUROPÄISCHE PATENTSCHRIFT

(11) **EP 2 754 351 B1**
(45) Veröffentlichungstag und Bekanntmachung des Hinweises auf die Patenterteilung: **21.10.2015**
(21) Anmeldenummer: 13005913.2
(22) Anmeldetag: 18.12.2013
(51) Int. Cl.: A21C 1/02, A21C 1/14, B01F 5/22, B01F 7/18, B01F 15/02, B01F 7/16, B01F 7/00, B01F 15/00

(54) **Mischer mit Rührrad mit vertikaler Drehachse und Mischverfahren**
Mixer with mixing blade with a vertical axis of rotation and mixing method
Mélangeur et agitateur rotatif sur axe vertical et procédé de mélange

(30) Priorität: 09.01.2013 IT BZ20130002
(43) Veröffentlichungstag der Anmeldung: 16.07.2014
(73) Patentinhaber: Unidea Srl con Unico Socio, 38027 Male (TN) (IT)
(72) Erfinder: Bezzi, Francesco, I-38020 Cusiano (TN) (IT)
(74) Vertreter: Oberosler, Ludwig

(56) Entgegenhaltungen:
- WO-A1-2010/141012
- WO-A1-2012/028291
- DE-A1- 19 642 849
- DE-A1-102009 044 205
- US-A- 5 630 666
- US-B1- 6 886 974

## Beschreibung

Die Erfindung bezieht sich auf einen Mischer mit Rührrad mit vertikaler Drehachse für die Herstellung von Verbindungen aus festen Komponenten, flüssigen Komponenten, Bindemitteln und eventuellen Zusätzen welche getrennt, zusammen oder vorgemischt zugeführt werden.

Es sind Mischer für die Herstellung von Gemischen bekannt welche für die Zubereitung homogener Gemische relativ lange Mischzeiten benötigen, weiters erfolgt die Beschickung dieser Mischer unter Bildung von Klumpen oder Einschließungen deren Auflösung längere Bearbeitungszeiten fordert. Ein weiteres Problem der bekannten Mischer sind die relativ langen Zeiten für die Entleerung und für die Reinigung der inneren Oberflächen und der Flächen des Mischers welche mit dem Gemisch in Berührung kommen.

Aus der DE 19642849 A1, die einen Mischer gemäß dem Oberbegriff des Anspruchs 1 offenbart, ist ein Verfahren zum Herstellen einer Biomüllsuspension und Vorrichtung zur Durchführung des Verfahrens bekannt, wobei eine Reißtrommel koaxial innerhalb einer Mischtrommel und zur Rührflügelwelle, mit einer Förderschnecke ausgestattet ist welche mit Reißwerkzeugen bestückt ist. Die Reißwerkzeuge der Förderschnecke arbeiten mit, entsprechend an der Innenwand der Reißtrommel angeordneten, Reißwerkzeugen zusammen.

Aus der DE 102009044205 A1 ist eine Mischvorrichtung für Malerfarben und Wandzusätze bekannt. Es sind zwei Mischräder vorgesehen welche zueinander koaxial arbeiten und in beide Drehrichtungen betätigt werden können.

Aus der WO 2012/028291 A1 ist eine Vorrichtung und ein Verfahren zum Mischen staubartiger und flüssiger Komponenten bekannt, wobei an der rotierenden Welle für die Mischflügel, im oberen Bereich, eine rotierende Scheibe vorgesehen ist auf welche die eingeleitete Flüssigkeit fällt um durch Zentrifugalkraft radial verstreut zu werden.

Die Erfindung stellt sich die Aufgabe einen Mischer der eingangs beschriebenen Art zu schaffen welcher geeignet ist, innerhalb kurzer Mischzeiten, homogene Gemische herzustellen welche innerhalb kurzer Zeit entleert werden und welcher mit einem inneren, effizienten und zeitsparendem Waschsystem ausgestattet ist.

Zur Lösung dieser Aufgabe schlägt die Erfindung einen Mischer gemäß Anspruch 1 vor welcher wesentlich aus einem zylindrischen Behälter mit konischem Boden, an dessen Scheitel eine Entleerungsöffnung vorgesehen ist, aus einem Rührrad welches mindestens einen angewinkelten Rührflügel und eine vertikale, mit der Behälterachse koaxiale, Antriebswelle aufweist, einem Entleerungsventil und mindestens einem Beschickungsstutzen für die zu vermischenden Komponenten, besteht.

Der Behälter kann erfindungsgemäß innen, an den Wänden des zylindrischen Teiles und/oder an den Wänden des konischen Bodens, mit Leitflügel ausgestattet sein welche eventuell durchlöchert, verstellbar und von außen betätigbar sind. Das Rührrad welches mit mindestens einem angewinkelten Mischflügel ausgestattet ist, ist an einer Welle befestigt welche in beide Drehrichtungen angetrieben werden kann und welches auf bekannte Art vertikal, während der Rotation, verstellbar ist. Gemäß einer besonderen Ausführungsart hat die besagte Welle die Form eines Rohres um innen einen vertikal verstellbaren Schaft für die Betätigung eines, an der Entleerungsöffnung des Behälters vorgesehenen, tellerförmigen Ventilkörpers aufzunehmen.

Der aufmachbare Deckel des Behälters ist mit mindestens einem Beschickungsstutzen für die zu vermischenden Komponenten ausgestattet. Der selbe Deckel und/oder der obere Teil des Behälters können mit einem bekannten Beschickungsrohr für Wasser oder für andere flüssige Komponenten ausgestattet sein.

Der oder die Rührflügel können mit Durchbrüchen versehen sein welche mit angewinkelten Flügelchen versehen sind um, während der Rotation der Rührflügel, das Passieren des Gemisches durch diese Durchbrüche hindurch zu fördern. Die Mischflügel können weiters, im Bereich der Einlaufkante und/oder der Auslaufkante, mit einem Ableit-Längsflügel ausgestattet sein welcher geeignet ist um auf das Gemisch einen Druck auszuüben welcher diesem eine vertikale Bewegung verleiht und/oder in diesem einen Mischwirbel erzeugt. Die Wirkung dieses Ableit-Längsflügels erhöht weiters die Durchlaufbewegung des bearbeiteten Gemisches durch die Durchbrüche hindurch welche am Rührflügel selbst vorgesehen sind wodurch das Durchmischen zwischen der Gemischmasse welche mit der Unterseite des Rührflügels in Berührung steht mit der Masse welche mit der Oberseite des Flügels in Berührung steht, erfolgt. In Abhängigkeit der Drehrichtung des Rührrades und der Anwinkelung der Rührflügel, erfährt die Gemischmasse während der Bearbeitung, außer einer Drehung in die selbe Richtung der Drehrichtung des Rührrades, im Wirkungsbereich des Rührrades, eine Bewegung in axialer Richtung (Heben oder Senken) wobei, nahe der zylindrischen oder konischen Behälterwand, eine axiale Gegenbewegung erzeugt wird, so dass eine toroidale Gemischmasse mit Drehung um die Rotationsachse des Rührrades und mit Drehung um den inneren Ring welcher durch die Zentren der Kreisquerschnitte des toroidalen Bereiches definiert ist, erzeugt wird.

Erfindungsgemäß kann die kombinierte Bewegung der toroidalen Masse welche durch die Drehung des Rührrades bewirkt wird, durch, an den Innenflächen des Behälters vorgesehene, verstellbare Leitflügel welche, bezogen auf eine horizontale Ebene, eine mehr oder weniger angewinkelte Position einnehmen können, beeinflusst und/oder gebremst werden um ein "Anheben" oder ein "Absenken" der vorbeibewegten, um die Rotationsachse des Rührrades, koaxial zum toroidalen Bereich des Gemisches bewegte Masse, zu erreichen.

Die Kombination der Bewegungen mit unterschiedlichen Drehbewegungen welche dem Gemisch durch das Rührflügelrad übertragen werden, zusammen mit den Bewegungen welche durch den Fluss und/oder die Verwirbelung des Gemisches durch die an den Rührflügeln vorgesehenen Durchbrüchen, durch die Ableit-Längsflügel an der Eintritts- und/oder an der Austrittskante der Rührflügel und durch die Wirkung der verstellbaren Leitflügel an den Innenflächen des Behälters entstehen, kombiniert mit dem periodischen Umschalten des Drehsinnes des Rührrades und/oder mit der bekannten vertikalen Verstellung des Rührrades während seiner Rotation, bewirkt eine andauernde und intensive Durchmischung der Komponenten in kurzer Zeit und die Erzeugung eines, betreffend die Zusammensetzung und die Konsistenz, homogenen Gemisches.

Um während der Beschickungsphase mit den verschiedenen Komponenten die Bildung von Klumpen und/oder von Einschlüssen zu verhindern, um eine gleichmäßige Verteilung der Komponenten im Inneren des Behälters zu erreichen und um zu verhindern dass die besagten Komponenten, während der Beschickung, Spritzern ausgesetzt sind, schlägt die Erfindung vor die Antriebswelle des Rührrades im oberen Bereich mit einem Streukonus zu versehen auf welchen die eingebrachten Komponenten fallen um durch Zentrifugalkraft verstreut zu werden. Auf den besagten Streukonus oder auf die Antriebswelle des Mischrades an welche dieser befestigt ist kann ein Vibrator wirken um die Zerkleinerung eventueller Klumpen der eingebrachten Komponenten zu begünstigen. Wenn der Vibrator auf die Antriebswelle wirkt wird auch das Rührrad in Vibration versetzt und die Vibrationen werden auf das mit dem Rührrad in Kontakt stehende Gemisch übertragen.

Natürlich sind die Beschickungsstutzen für die staubförmigen Komponenten oder für jene Komponenten welche dazu tendieren Klumpen zu bilden, im Wirkungsbereich des Streukonus vorgesehen, während die Beschickungsstutzen für Komponenten mit größerer Körnung nahe an der Behälterwand, außerhalb des Wirkungsbereiches des Streukonus, vorgesehen sein können.

Die Entleerungsgeschwindigkeit des Mischers wird erfindungsgemäß dadurch erhöht, dass das Rührrad eine Drehrichtung hat welche einen Druck nach unten auf das Gemisch bewirkt und dass das Rührrad progressiv nach unten bewegt wird. Natürlich werden die verstellbaren Leitflügel an den Innenflächen des Behälters, während der Entleerungsphase, so ausgerichtet, dass die Entleerungsbewegung der Gemischmasse in Richtung Entleerungsöffnung begünstigt wird.

Zwecks Verbesserung des internen Waschvorganges am Mischer schlägt die Erfindung vor, am Rührrad und/oder an dessen Welle, Düsen vorzusehen deren Strahl gegen die Innenflächen des Behälters, gegen die Welle und gegen das Mischrad gerichtet ist. Durch die Drehung und die vertikale axiale Bewegung des mit Düsen ausgestatteten Rührrades und der Welle, ist eine innere effiziente Reinigung des Mischers innerhalb kurzer Zeit möglich.

Die Erfindung wird anschließend anhand eines, in den beigelegten Zeichnungen schematisch dargestellten, vorzuziehenden Ausführungsbeispieles eines erfindungsgemäßen Mischers näher erklärt, dabei erfüllen die Zeichnungen rein erklärenden, nicht begrenzenden Zweck.

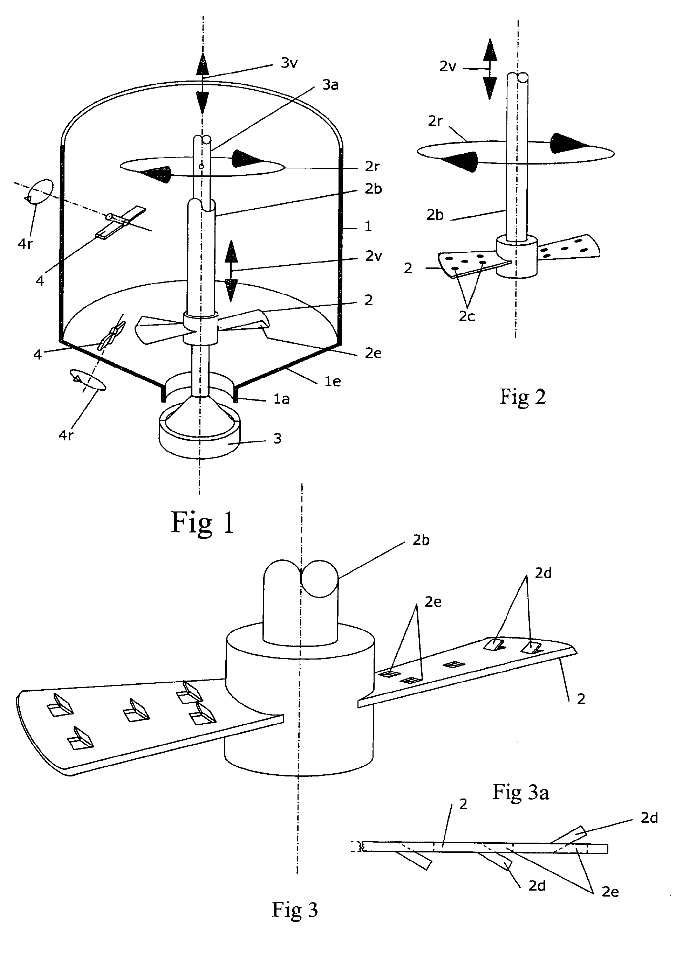

Die Fig. 1 zeigt einen erfindungsgemäßen Mischer in perspektivischer Darstellung, teilweise in Schnittdarstellung gemäß einer Schnittebene welche durch die Rotationsachse des Rührrades verläuft, ohne Deckel, mit einem Ventilkörper an der Entleerungsöffnung welcher über einen Schaft bewegt wird, welcher sich durch die rohrförmige Welle des Rührrades erstreckt und mit verstellbaren Leitflügeln an der Innenseite des Mischbehälters.

Die Fig. 2 ist die perspektivische Darstellung eines Rührrades mit Rührflügel mit Durchbrüchen.

Die Fig. 3 ist die perspektivische Darstellung eines Rührrades mit Durchbrüchen an welchen Einleitflügelchen oder Streuflügelchen vorgesehen sind.

Die Fig. 3a ist die Seitenansicht auf einen Rührflügel eines Rührrades mit Durchbrüchen und mit Einleitflügelchen oder Streuflügelchen im Bereich der Durchbrüche.

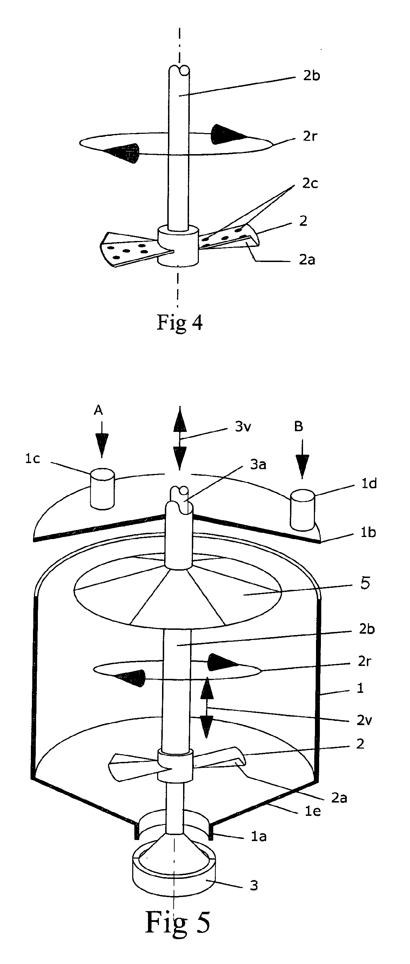

Die Fig. 4 ist die perspektivische Darstellung eines Rührrades mit Rührflügel mit Durchbrüchen, wobei an einer der Längskanten ein Ablenkflügel vorgesehen ist.

Die Fig. 5 zeigt in perspektivischer Darstellung den selben in Fig. 1 gezeigten Mischer, ohne innere verstellbare Leitflügel, mit Deckel welcher mit zwei Beschickungsstutzen versehen ist und mit einem, an der Antriebswelle befestigtem, Streukonus.

Der Behälter des Mischers besteht aus einem zylindrischen Teil 1 und einem konischen Boden 1e welcher im tiefsten Bereich mit einem Entleerungsventil 1a versehen ist. Der zylindrische Teil und/oder der Boden 1a des Behälters können innen mit, gegebenenfalls perforierten Leitflügeln 4 ausgestattet sein welche verstellbar 4r und von außen betätigbar sind. Das Entleerungsventil 1a besteht aus einem tellerförmigen Ventilkörper 3 welcher über einen, innen in der rohrförmigen Welle 2b des Rührrades mit angewinkelten rotierenden 2r Rührflügel 2, verschiebbaren Schaft 3a betätigt wird, dabei ist das Rührrad zusammen mit der Welle vertikal verstellbar 2v. Die Rührflügel 2 des Rührrades können Durchbrüche 2c mit unterschiedlicher Form aufweisen welche gegebenenfalls mit angewinkelt abstehenden Flügelchen 2d ausgestattet sind welche derart angeordnet sind dass sie, während einer Drehrichtung 2r, als Einleitflügelchen für den Durchfluss des bearbeiteten Gemisches durch die Durchbrüche 2c hindurch wirken und während der entgegengesetzten Drehrichtung 2r als Streuflügelchen wirken. Die selben Flügel 2, mit oder ohne Durchbrüche 2c können an der Eintrittskante und/oder an der Austrittskante mit Längsflügel 2a versehen sein welche zur Neigung des Rührflügels angewinkelt sind und gegebenenfalls mit Durchbrüchen versehen sind.

An der Welle 2d des Rührrades ist im oberen Bereich ein Streukonus 5 welcher auch als Spritzschutz dient ortsfest, elastisch oder axial verstellbar befestigt.

Der Deckel 1b des Behälters ist mit einem Beschickungsstutzen 1c ausgestattet welcher so positioniert ist, dass die pulverförmigen oder feinkörnigen Komponenten auf den, zusammen mit dem Rührrad rotierenden, Streukonus 5 fallen um dadurch die Zerkleinerung eventueller Klumpen und die gleichmäßige Verstreuung zu erreichen. Für die Komponenten mit größerer Körnung ist ein Beschickungsstutzen 1d vorgesehen welcher in der Nähe der Behälterwand positioniert ist so dass die eingebrachten Komponenten nicht auf den Streukonus 5 fallen.

Für die Einbringung des Wassers oder anderer flüssiger Komponenten kann der Behälter im oberen Bereich mit einem Ringrohr versehen sein welches mit mehreren Auslaufdüsen ausgestattet ist.

Zwecks Waschen des Mischers können bekannte Systeme mit Düsen, deren Strahl zur Behälterinnenwand tangential ausgerichtet ist, vorgesehen sein, wobei diese Düsen erfindungsgemäß durch Düsen unterstützt werden welche an den Rührschaufeln und/oder an der Welle des Rührrades vorgesehen sind.

Die Zubereitung des Gemisches im erfindungsgemäßen Mischer beginnt mit der Beschickung der Komponenten, z.B. mit feiner Körnung welche gleichmäßig durch den, zusammen mit dem Rührrad rotierenden 2r, Streukonus 5 erfolgt. Die intensive Durchmischung der bereits gleichmäßig verstreuten. eingebrachten Komponenten wird, außer durch die Drehung 2r des Rührrades mit angewinkelten Rührflügeln 2, durch die periodische Umkehrung der Richtung der Drehung 2r und durch die wiederholte vertikale Aufwärts- und Abwärtsbewegung 2v erreicht. Eine weitere Zwangsvermischung unter den bewegten Gemischmassen erfolgt durch den Durchfluss des Gemisches durch die Durchbrüche 2c an den Mischflügeln 2 welcher durch eigene Flügelchen 2d bewirkt wird welche, während einer Drehrichtung einleitend wirken und während der entgegengesetzten Drehrichtung zerstreuend wirken. Der besagte Durchmischungsablauf kann weiters durch Längsflügel 2a an der Eintrittskante und/oder an der Austrittskante der Rührflügel 2 angeregt und gesteigert werden, gegebenenfalls sind auch diese mit Durchbrüchen versehen. Die Anregung der Durchmischung in den Umfangsbereichen des Gemisches welches längs der Innenflächen des Behälters gleitet kann mittels der verstellbaren 4r Leitflügel 4 erfolgen indem in diesem Umfangsbereich des Gemisches eine Anhebbewegung oder eine Druckbewegung nach unten erzeugt wird.

Die Wirkung des Streukonus 5 kann durch die Anbringung eines bekannten, z.B. mechanischen oder hydraulischen, Vibrators an der Welle 2b, bei fester Verbindung des Streukonus mit der Welle oder durch Anbringung des Vibrators am Konus selbst, bei elastischer oder verstellbarer Anbringung an der Welle 2b des Mischrades, erhöht werden.

## Patentansprüche

1. Mischer mit von einer Welle (2b) mit vertikaler Drehachse und axial bewegbarem Mischrad mit mindestens einem angewinkelten Mischflügel (2), mit zylindrischem Behälter (1) welcher oben mit einem aufmachbaren Deckel (1b) und unten mit einem mit Entleerungsöffnung (1a) und Ventil versehenem konischen Boden (1e) versehen ist, wobei an der selben Welle (2b) des Mischrades, im oberen Bereich des Behälters (1), ein Streu- und Spritzschutzkonus (5) vorgesehen ist, **dadurch gekennzeichnet, dass** die Welle gleichzeitig in zwei Drehrichtungen angetrieben bewegbar ist, dass der oder die Mischflügel (2) des Mischrades mit Durchbrüchen (2c) unterschiedlicher Formen und Ausmaße versehen sind und dass, in anliegender Position zu diesen Durchbrüchen (2c), an der Oberseite und/oder an der Unterseite der Mischflügel, abstehende Flügelchen vorgesehen sind welche eine, zur Oberfläche des Mischflügels (2), angewinkelte Position einnehmen.

2. Mischer gemäß Anspruch 1, **dadurch gekennzeichnet, dass** der oder die Mischflügel (2) des Mischrades an der Eintrittskante und/oder an der Austrittskante mit einem Längsflügel (2a) versehen sind welcher, zur Neigung des Mischflügels (2), unterschiedliche Neigung aufweist und welcher gegebenenfalls mit Durchbrüchen versehen ist.

3. Mischer gemäß Anspruch 1, **dadurch gekennzeichnet, dass** die Welle (2b) des Mischrades, an welcher der Streu- und Spritzschutzkonus (5) ortsfest angebracht ist, bzw. der Streu- und Mischkonus (5) selbst, mit einem Vibrator ausgestattet ist.

4. Mischer gemäß Anspruch 1, **dadurch gekennzeichnet, dass** der Streu- und Spritzschutzkonus (5) elastisch oder axial verstellbar an der Welle (2b) angebracht ist und mit einem Vibrator ausgestattet ist und dass der Deckel des Behälters mindestens einen Beschickungsstutzen (1c) innerhalb des Wirkungsbereiches des darunter angeordneten Streu- und Spritzschutzkonus (5) aufweist.

5. Mischer gemäß Anspruch 1, **dadurch gekennzeichnet, dass** an der zylindrischen Wand (1) und/oder an der konischen Wand (1e) innen im Behälter gegebenenfalls perforierte, einstellbare (4r), von außen betätigbare Leitflügel (4) vorgesehen sind.

6. Mischer gemäß Anspruch 1, **dadurch gekennzeichnet, dass** der oder die Mischflügel (2) des Mischrades und/oder die Weller (2b) des Mischrades mit Düsen ausgestattet sind deren Reinigungsstrahle gegen die Innenwände des Behälters und gegen die Rührflügel (2) gerichtet sind.

7. Mischer gemäß Anspruch 1, **dadurch gekennzeichnet, dass** das an der Entleerungsöffnung (1a) vorgesehene Ventil ein Tellerventil (3) ist dessen Betätigungsschaft (3a) im Inneren der rohrförmigen Welle (2b) des Mischrades längsverschiebbar (3v) ist.

8. Mischverfahren durchgeführt mittels Mischer gemäß Anspruch 1, **dadurch gekennzeichnet, dass** während der Entleerungsphase das Mischrad mit einer Drehrichtung angetrieben (2r) wird welche auf das Gemisch einen Druck nach unten bewirkt, während die axiale Bewegung (2v) des Mischrades nach unten erfolgt und während die verstellbaren (4r) Leitbleche (4) eine wesentlich vertikale Position einnehmen.

## Claims

1. A mixer comprising a mixing wheel which is movable by a shaft (2b), said shaft having a vertical axis of rotation, and axially and which has at least one angled mixing blade (2), the mixer comprising a cylindrical container (1) which is provided at the top with an openable lid (1b) and at the bottom with a conical base (1e) provided with an emptying opening (1a) and a valve, wherein an anti-scatter and anti-splash cone (5) is provided on the same shaft (2b) of the mixing wheel, in the upper region of the container (1), **characterized in that** the shaft is at the same time movable in a driven manner in two directions of rotation, **in that** the mixing blade(s) (2) of the mixing wheel are provided with apertures (2c) of different shape and size, and **in that** fins which project on the upper side and/or on the underside of the mixing blades are provided adjacent to said apertures (2c), which fins assume an angled position relative to the surface of the mixing blade (2).

2. The mixer according to claim 1, **characterized in that** the mixing blade(s) of the mixing wheel are provided with a longitudinal fin (2a) on the leading edge and/or on the trailing edge, said longitudinal fin having an inclination different to the inclination of the mixing blade (2) and optionally being provided with apertures.

3. The mixer according to claim 1, **characterized in that** the shaft (2b) of the mixing wheel, to which the anti-scatter and anti-splash cone (5) is attached in a fixed position, and/or the scattering and mixing cone (5) itself, is equipped with a vibrator.

4. The mixer according to claim 1, **characterized in that** the anti-scatter and anti-splash cone (5) is attached to the shaft (2b) in an elastically or axially movable manner and is equipped with a vibrator, and **in that** the lid of the container has at least one feed pipe (1c) within the area of action of the anti-scatter and anti-splash cone (5) arranged therebelow.

5. The mixer according to claim 1, **characterized in that** guide vanes (4), which are optionally perforated and are adjustable (4r) and are able to be actuated from outside, are provided on the cylindrical wall (1) and/or on the conical wall (1e) inside the container.

6. The mixer according to claim 1, **characterized in that** the mixing blade(s) (2) of the mixing wheel and/or the shaft (2b) of the mixing wheel are equipped with nozzles, the cleaning jets of which are directed towards the inner walls of the container and towards the stirring blades (2).

7. The mixer according to claim 1, **characterized in that** the valve provided at the emptying opening (1a) is a disc valve (3), the actuating shaft (3a) of which is longitudinally displaceable (3v) inside the tubular shaft (2b) of the mixing wheel.

8. A mixing method carried out by means of a mixer according to claim 1, **characterized in that**, during the emptying phase, the mixing wheel is driven (2r) with a direction of rotation that creates a downward pressure on the mixture, while the axial movement (2v) of the mixing wheel takes place in the downward direction and while the movable (4r) guide plates (4) assume a substantially vertical position.

## Revendications

1. Mélangeur et agitateur rotatif sur axe vertical déplaçable dans la direction axiale avec au moins une pale agitatrice (2) inclinée, avec un récipient cylindrique (1) muni en haut d'un couvercle ouvrable (1b) et en bas d'un fond conique pourvu d'une ouverture de vidage (1a) et d'une soupape, ledit arbre (2b) de l'agitateur présentant, dans la partie supérieure du récipient (1), un cône de protection contre les pulvérisations et les projections (5), **caractérisé en ce que** l'arbre est mobile et entraîné simultanément dans deux directions rotatives, **en ce que** la ou les pales agitatrices (2) de l'agitateur sont pourvues de perforations (2c) de diverses formes et dimensions, et **en ce que**, partant de ces perforations, sont prévues des ailettes en saillie sur la face supérieure et/ou sur la face inférieure de la pale agitatrice, inclinées par rapport à la surface de la pale agitatrice (2).

2. Mélangeur selon la revendication 1, **caractérisé en ce que** la ou les pales agitatrices (2) de l'agitateur sont munies, sur l'arête d'entrée et/ou sur l'arête de sortie, d'une pale longitudinale (2a) ayant une inclinaison différente par rapport à l'inclinaison de la pale agitatrice (2) et présentant des perforations, le cas échéant.

3. Mélangeur selon la revendication 1, **caractérisé en ce que** l'arbre (2b) de l'agitateur sur lequel le cône de protection contre les pulvérisations et les projections (5) est monté de manière fixe, ou bien le cône de protection contre les pulvérisations et les projections (5) lui-même, est équipé d'un vibreur.

4. Mélangeur selon la revendication 1, **caractérisé en ce que** le cône de protection contre les pulvérisations et les projections (5) monté sur l'arbre (2b) de manière à être réglable de façon élastique ou dans la direction axiale est équipé d'un vibreur, et **en ce que** le couvercle du récipient présente au moins un raccord d'alimentation (1c) à l'intérieur du champ d'action du cône de protection contre les pulvérisations et les projections (5) situé en dessous.

5. Mélangeur selon la revendication 1, **caractérisé en ce que** la paroi cylindrique (1) et/ou la paroi conique (1e) à l'intérieur du récipient est munie de pales de guidage (4) perforées le cas échéant, réglables (4r) et activables de l'extérieur au moyen d'une pale de guidage (4).

6. Mélangeur selon la revendication 1, **caractérisé en ce que** la ou les pales agitatrices (2) de l'agitateur et/ou les arbres (2b) de l'agitateur sont équipés de buses dont les jets de nettoyage sont orientés en direction des parois intérieures du récipient et en direction des des pales agitatrices (2).

7. Mélangeur selon la revendication 1, **caractérisé en ce que** la soupape prévue sur l'ouverture de vidage (1a) est une soupape à siège plan (3) dont la tige de commande (3a) est déplaçable dans le sens longitudinal (3v) à l'intérieur de l'arbre tubulaire (2b) de l'agitateur.

8. Procédé de mélange effectué avec le mélangeur selon la revendication 1, **caractérisé en ce que**, pendant la phase de vidage, l'agitateur est entraîné par un mouvement rotatif (2r) exerçant sur le mélange une pression vers le bas, alors que le mouvement axial (2v) de l'agitateur s'effectue vers le bas et que les pales de guidage (4) réglables (4r) se mettent dans une position pratiquement verticale.
